# EUROPEAN PATENT APPLICATION

(11) **EP 2 754 750 A1**
(43) Date of publication of application: **16.07.2014**
(21) Application number: 13150960.6
(22) Date of filing: 11.01.2013
(51) Int. Cl.: D21G 1/00, F16F 7/10

(54) **Arrangement for controlling vibrations in a fiber web machine and a linear motion amplifier**

(71) Applicant: Valmet Technologies, Inc., 02150 Espoo (FI)
(72) Inventor: Hakola, Jani, FI-04460 Nummenkylä (FI); Viljanmaa, Mika, FI-00760 Helsinki (FI)
(74) Representative: Berggren Oy Ab

(57) **Abstract**

The invention relates to an arrangement for controlling vibrations in a fiber web machine, in particular for controlling vibrations of a nip of a fiber web machine, which arrangement comprises an inertial actuator (10) which a force generating element (12) and a mass element (11), which is elastically by elastic means (18) fastened to a construction or a frame (15), characterized in, that in the arrangement for controlling vibrations comprises an inertial mass (11) as the mass element for receiving the vibration generated forces and by the inertial actuator (10) an inertial force counteracting the acceleration of the inertial mass (11) is provided to control the vibrations.

## Description

The invention relates to an arrangement for controlling vibrations in a fiber web machine. In particular the invention relates to an arrangement according to the preamble of claim 1 and to a linear motion amplifier according to the preamble of claim 14.

In fiber web machines the fiber web is produced and treated in an assembly formed by a number of apparatuses arranged consecutively in a process line. A typical production and treatment line comprises a head box, a wire section and a press section as well as a subsequent drying section and a reel-up. The production and treatment line can further comprise other devices and sections for finishing the fiber web, for example, a sizer, a calender, a coating section. The production and treatment line also comprises at least one winder for forming customer rolls as well as a roll packaging apparatus. In this description and the following claims by fiber webs are meant for example a paper, board, tissue webs. Each section and device comprises several different components in connection of which vibrations may occur. For example vibrations may occur in a nip, which is formed in between two elements, typically between two rolls but also the nip can be formed with a roll, a belt, a shoe or corresponding element and a counter-element of corresponding or different kind, often at least one of the nip forming elements is a roll. The fiber web is passed through the nip by itself or supported by a belt, a felt, a wire or a corresponding fabric. In the nip the fiber web is pressed by the nip pressure in order to remove water from the web or to effect to the properties of the web. Typical nips of a fiber web production line are press nips in which water is removed, calendar nips in which the web is treated for example to achieve certain surface properties such as gloss, reeling and winding nips in which the nip effect is used for the reeling/winding of the fiber web.

In WO publication 01/50030 is disclosed a method for damping the vibration of a roll used in paper production, the roll comprising a circular mantle, so that damping is exerted externally on the roll mantle. In this known method a vibration characteristic is measured and damping is controlled on the basis of the measurement result. The damping is directed to the desired location, for instance to the center of the roll and the vibration quality is taken into account. The damping may be active or passive and the method is applicable for instance to calenders. In active damping a vibration absorbing force is exerted externally on the roll e.g. with the aid of a magnetic field, for example with an electric magnet, or a fluid jet. In this case especially variation of the vibration damping force exerted on the roll allows control of the damping. The external damping requires that damping means are located outside near the roll and also support structures for the damping means thus it is not applicable in applications where the space around the roll is limited.

In WO publication 2006/040399 is disclosed a method for compensation variation in nip load caused by shape defects of a roll in a calender, which comprises a first rotating roll and a second rotating roll, in the nip formed by which the web is treated and loading devices for altering the nip loading. In this prior art method a shape profile is defined for the first roll, the angle of rotation of the first roll is measured, and the loading devices are controlled on the basis of the shape profile of the first roll, in order to compensate the nip-loading variation caused by shape error in the shell of the first roll. The control of the loading means is rather complicated as the nip load requires strong static load to be created which is hard to control such that the variations can be compensated.

In US patent publication 5,487,715 is disclosed a hydraulic vibration damper for use inside a roll mantle for a roll for use in fiber web processing comprising: a fixed central axis, a roll mantle adapted to rotate about the central axis, a first chamber disposed between the fixed central axis and the roll mantle, said chamber being half-annular in form and filled with liquid for transferring a hydraulic supporting force from the central axis to the roll shell, at least one second chamber filled partially with air and partially with liquid, said second chamber extending substantially along a length of the roll and a plurality of narrow capillary lines connecting the first chamber and the second chamber. The control of the loading means is rather complicated as the nip load requires strong static load to be created which is hard to control such that the variations can be compensated.

In US patent publication 5,961,899 is disclosed a vibration control apparatus and method for calender rolls and the like. In this known vibration control apparatus and method for controlling vibration between two or more rolls are controlled vibration induced thickness variations in a medium exiting from the nip. The apparatus includes a frame, a first and second rolls mounted relative to the frame and a force generator, such as an electromechanical active actuator, servo hydraulic actuator, controllable semi-active damper, active vibration absorber or adaptive tuned vibration absorber, provides cancelling forces to control vibration between the first and second roll thereby, controlling such vibration induced thickness variation in the medium.

In paper-machine vibration damping, active vibration damping has been found to yield new possibilities. A problem is the lack of active actuators. Ideally, one would desire actuators having great force generation capability which could be located freely in the construction. Such an actuator is e.g. the so-called inertial actuator. The actuator consists of a force generating element and a mass which is elastically fastened to the construction. When the force actuator generates force, reacting force applies to the mass which thus operates as a support surface. There are only a very limited number of actuators generating force on high frequencies. Common to these inertial actuators is that they generate quite large forces but produce only small linear motions. One such an actuator is a piezo in which the length of the ceramic element can be changed by generating an electric field over the crystal. By preventing the length change, the actuator generates a force equivalent to its own rigidity. Therefore, the force generated by the actuator is at its maximum when the length change is totally prevented and, on the other hand, with the largest possible length change the actuator generates a force insignificantly small. For example the length change of the piezo is typically only about 0.1% of its own length. Further constructing linear motion amplifiers with high amplification is very difficult due to the magnitude of required amplification ratios.

An object of the invention is to create an arrangement for controlling vibrations in a fiber web machine and in which the disadvantages and problems of prior art are eliminated or at least minimized.

A further object of the invention is to provide an arrangement for solving the disadvantage of inertial actuators due to their small linear motions.

A further object of the invention is to create a new type of linear motion amplifier, in particular for an arrangement for controlling vibrations in a fiber web machine.

In order to achieve the above mentioned objects the arrangement according to the invention is mainly characterized by the features of the characterizing clause of claim 1. The linear motion amplifier according to the invention in turn is mainly characterized by the features of the characterizing clause of claim 14.

In the arrangement for controlling vibrations in a fiber web machine in accordance with the invention the arrangement comprises an inertial mass for receiving generated reaction forces and an inertial force counteracting the acceleration of the mass is created. According to an advantageous feature in the arrangement for controlling vibrations in a fiber web machine in accordance with the invention a linear motion amplifier for the inertial actuator is implemented hydraulically.

According to an advantageous feature the amplification ratio of the linear motion amplifier is high, advantageously 10 - 500.

Advantageously the linear motion amplifier comprises a primary and a secondary piston with considerably different areas of the pistons and thus high amplification ratio is generated in the motion of the inertial mass of the actuator. The area ratio of the primary and secondary piston is preferably 10 - 500.

According to an advantageous feature the frequency area of vibration controlling and dampening is 10 - 5000 Hz.

According to an advantageous feature the dynamic forces generated by the actuator of the invention are 1 - 50 kN, advantageously 1 - 30 kN. It should be noted that the actuator in the arrangement of the invention is not engaged to the production of the static force of the actual in production needed effect in the fiber web machine and thus the force can advantageously be limited to the above dynamic force area.

According to an advantageous feature mass of the inertial mass is 10 - 500 kg.

According to another advantageous feature the inertial actuator comprises a piezo actuator in which as the length of the piezo changes the primary piston of the linear motion amplifier makes a motion which through an oil volume of the amplifier influences the secondary piston fastened to the inertial mass.

According to advantageous features of the invention when a piezo actuator is used the electric field for the piezo is generated by electronic means and it can be controlled by an electronic control to create the dampening in accordance with desired principle.

According to advantageous features the measurement of vibration can be arranged by measuring the speed of the mounting position and thus creating a correlating counteracting force. In the arrangement can also be utilized intelligent control systems, known as such, for creating active counteracting force on the basis of vibration creating effects measurements, which counteracting force then compensates the vibration actively. The control signal can be created directly or on the basis of a computer based control algorithm.

The invention is advantageously utilized in a nip of a fiber web machine, which nip is formed between a roll and its counter element. The roll forming the nip of the fiber web machine is provided with the arrangement according to the invention such that the vibrations occurring in the nip are controlled and dampened by the dynamic actuator. The counter element can be another roll, a fiber web roll, a belt, a shoe or corresponding element.

According to a preferred example of the invention the arrangement for controlling and dampening vibrations is provided inside a roll of a fiber web machine and thus great savings in space are achieved as no outside support structures etc. are needed. Advantageously the arrangement is located in the axial center area of the roll as thus best controlling and dampening of vibrations are provided in the lengthwise direction of the roll and thus affecting the substantial width area of the fiber web to be treated.

According to an advantageous example an inertial actuator is located within a roll, for example a calender roll, that forms a nip with another roll, for example another calender roll and the fiber web W is guided via the nip and treated, for example calendered. In this example the inertial actuator is located inside the roll for dampening vibration, for example barring. The roll comprises a rotating mantle that is fixed to the outer race of a bearing. The outer race rotates with the mantle of the roll and the inner race of the bearing is non-rotating and the rotation of the inner race is prevented by gravity that is created by mounting a heavy inertial mass element, for example 200 kg, on the inner race. The inertial mass element is in downward direction and thus precedents the rotation of the inner race, since the friction torques is not enough to turn the mass element from its downward position. As a force actuator in the inertial actuator a piezo actuator is provided. Other alternatives are electromagnetic actuators or using magnetostrictive material.

As an additional feature, the mass of the actuator can be replaced by a permanent magnet. Then by installing the actuator in the vicinity of e.g. a rotating roll, controlling and dampening forces can be generated to the roll without a mechanical contact.

According to an advantageous example of the invention in the arrangement an actuator is provided comprising a piezo actuator installed inside a frame, which is supported from its upper top end to an perforated plate and from its lower end to a primary piston, which primary piston influences with its upper surface to an oil volume, which extends in a space between the frame and the piezo actuator to the perforated plate to which are drilled holes or otherwise arranged open surface from which the oil is able to flow to a volume above the perforated plate, and an inertial mass for the actuator is installed above the frame such that at the bottom of a hole in the middle of the mass is arranged a pin, which operates as a secondary piston, which secondary piston is sealed to the oil volume at the top of the frame, and the piezo is pre-tensioned by pre-tensioning springs influencing the primary piston, advantageously in an air space, which pre-tensioning springs also compensate the gravity caused by the mass.

The invention provides an inertial actuator generating a great force packed to a very compact space. This enables integrating the actuator e.g. inside bearing housings or otherwise limited spaces.

In the following the invention is explained in detail with reference to the accompanying drawing to which the invention is not to be narrowly limited.

In figure 1 is shown schematically a prior art example of inertial actuator principle.

In figure 2 is shown schematically an example of an advantageous arrangement according to the invention.

In figure 3 is shown schematically another example of an advantageous arrangement according to the invention.

During the course of the following description like numbers and signs will be used to identify like elements according to the different views which illustrate the invention and its advantageous examples.

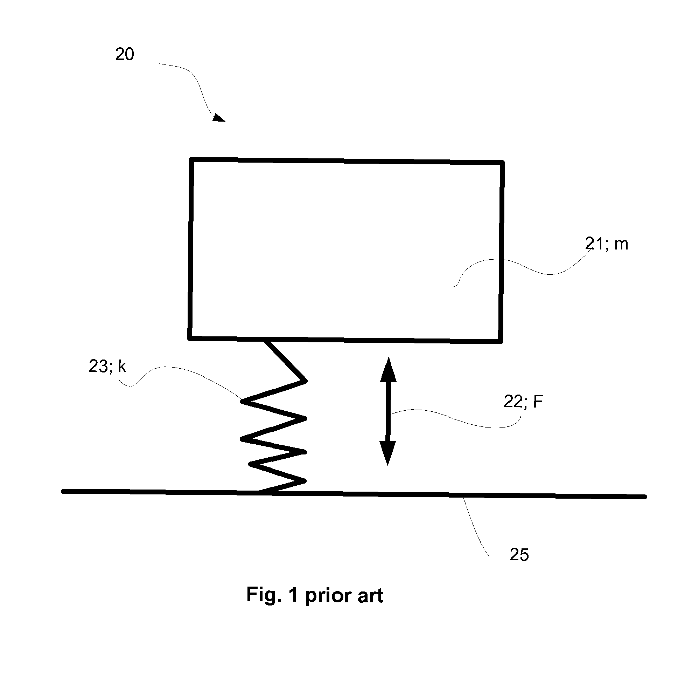

In figure 1 is schematically shown an example of an inertial actuator 20 as known from prior art. The actuator consists of a force generating element 22 and a mass element 21 which is elastically by elastic means 23 fastened to the construction 25. When the force generating element 22 generates force F, reacting force F applies to the mass element 21 which thus operates as a support surface. Equation of motion related to the actuator 20 is F = m*a + k*x, in which F is force generated by the force generating element 22, m is mass of the mass element 21, a is acceleration of the motion, k is elastic constant of the elastic means 23 and x is frequency. On constant frequency is x = X*sin (w*t), in which w is angular frequency, t is time and X is the length change, thus F = -m*w^2*X + k*X = (k-m*w^2) * X. When operating above the resonance frequency of the actuator (w^2 >> k/m), the response is approximately F = -m*w^2*X => -X = F / (w^2*m).

When aiming at the force of e.g. 5 kN on the frequency of about 100 Hz and using the mass of 10 kg, the mass must be provided with a motion having the magnitude of X = 5000 N / ((100*2*PI)^2 * 10 kg ) = 1.27 mm

If the above length change of 1.27 mm is wished to be produced directly for example by a piezo, it would require a piezo with the length of 1 270 mm, since the length change of the piezo is about 0.1 % of its own length. Then, the piezo would however generate no force at all with the maximum motion. If e.g. a piezo having the length of 100 mm and the diameter of 16 mm were chosen to be used, it would be possible to generate a motion of 100 µm or a force of 12 kN (the motion prevented). If aiming at a force of 5 kN, the piezo then generates motion at the maximum 7 kN/12 kN * 100 um = 58 µm. Thus, the inertial actuator would require a linear motion amplifier with amplification of 22.

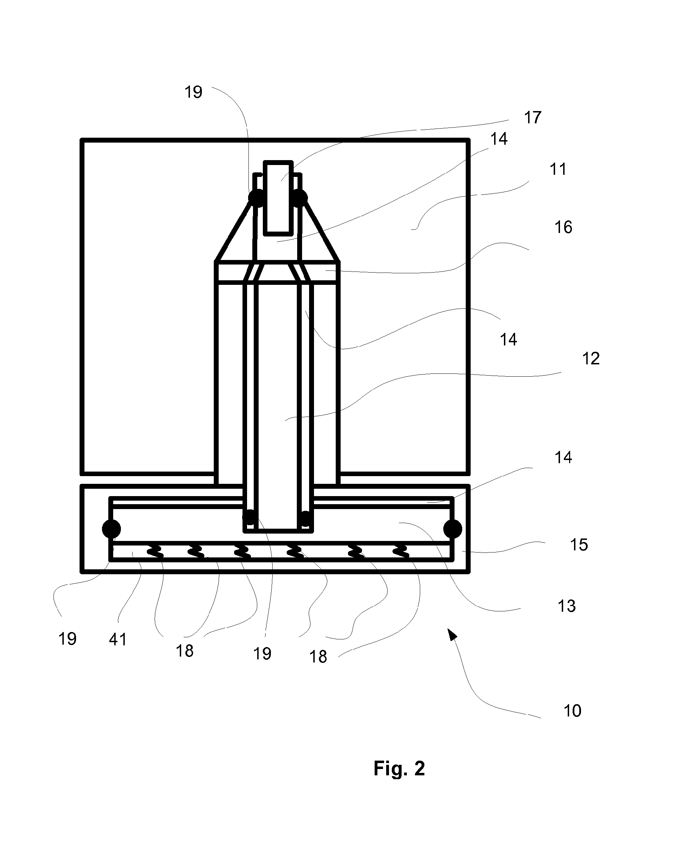

In the schematic example of figure 2 the actuator 10 according to one advantageous example of the invention comprises a frame 15, inside of which frame 15 is installed a piezo actuator 12 which is supported from its upper top end to an perforated plate 16 and from its bottom end to a primary piston 13 which is arranged supported by pre-tensioning springs 18 on the frame 15. The primary piston 13 influences with its upper surface to an oil volume 14. The oil volume 14 extends in a space between the frame 15 and the piezo actuator 12 to the perforated plate 16 to which are drilled holes or to which is otherwise arranged open surface though which the oil is able to flow to oil volume 14 above the perforated plate 16. An inertial mass 11 of the actuator 10 is installed above the frame 15 such that in the middle of the mass 11 is arranged a pin in the oil volume 14 which pin operates as a secondary piston 17. The secondary piston 17 is sealed by sealing 19 to the oil volume 14 at the top of the frame 15. The oil volume 14 is also sealed by sealing 19 between the frame 15 and the primary piston 13 and between the frame and the piezo actuator 12.

As the length of the piezo 12 changes, the primary piston 14 makes a motion which through the oil volume 14 influences the secondary piston 13 fastened to the mass 11. Because the areas of the pistons 13; 17 are considerably different, a high amplification ratio is generated in the motion of the mass 11.

As the piezo 12 cannot generate pulling forces, the piezo 12 is pre-tensioned by pre-tensioning springs 18, which influence the primary piston 17 in an air space 41 inside the frame 15. These springs 18 also compensate the gravity caused by the mass 11.

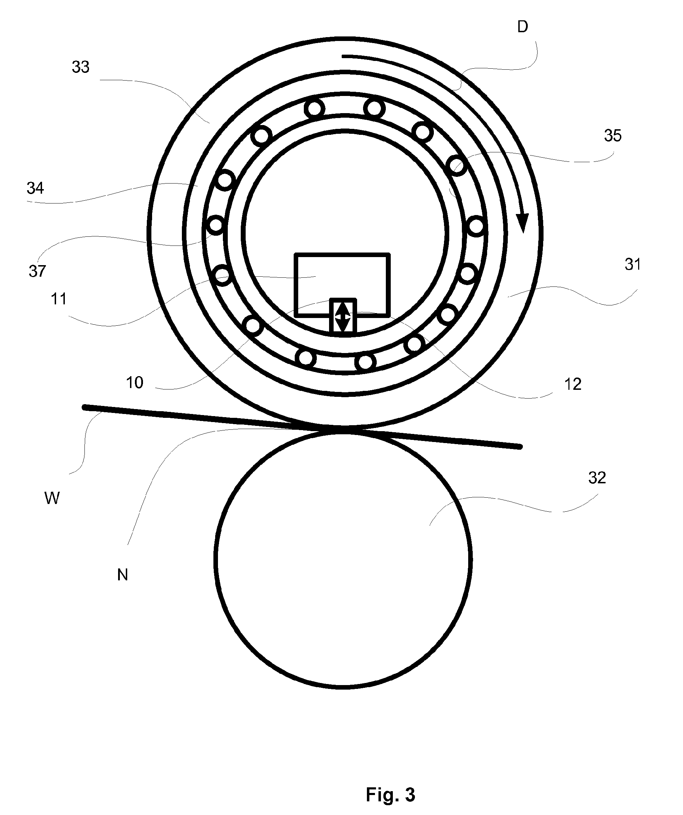

In the schematic example of figure 3 is shown an inertial actuator 10 according to one advantageous example of the invention in connection with a roll 31, for example a calender roll, that forms a nip N with another roll 32, for example another calender roll. The fiber web W is guided via the nip N and treated, for example calendered. In this example the inertial actuator 10 is located inside the roll 31 for dampening vibration, for example barring. The roll 31 comprises a rotating mantle 33 that is fixed to the outer race 34 of a bearing 37. The outer race 34 rotates with the mantle 33 of the roll 31 but the inner race 35 of the bearing 37 is non-rotating and the rotation of the inner race 35 is prevented by gravity that is created by mounting a heavy inertial mass element 11, for example 200 kg, on the inner race 35. The inertial mass element 11 is in downward direction and thus precedents the rotation of the inner race 35, since the friction torques is not enough to turn the mass element 11 from its downward position. As a force actuator in the inertial actuator a piezo actuator 12 is provided. Also other linear actuators can be used as force actuators.

## Claims

1. Arrangement for controlling vibrations in a fiber web machine, in particular for controlling vibrations of a nip of a fiber web machine, which arrangement comprises an inertial actuator (10; 20) which a force generating element (12; 22) and a mass element (11; 21), which is elastically by elastic means (18; 23) fastened to a construction or a frame (15; 25), **characterized in, that** in the arrangement for controlling vibrations comprises an inertial mass (11) as the mass element for receiving the vibration generated forces and by the inertial actuator (10) an inertial force counteracting the acceleration of the inertial mass (11) is provided to control the vibrations.

2. Arrangement according to claim 1, **characterized in, that** in the arrangement a hydraulic linear motion amplifier is used.

3. Arrangement according to claim 2, **characterized in, that** amplification ratio of the linear motion amplifier is high, preferably 10 - 500.

4. Arrangement according to claim 2 or 3, **characterized in, that** the linear motion amplifier comprises a primary and a secondary piston (13, 17) with considerably different areas of the pistons for providing high amplification ratio in the motion of the inertial mass (11) of the actuator.

5. Arrangement according to claim 4, **characterized in, that** the area ratio of the primary and secondary piston (13, 17) is 10 - 500.

6. Arrangement according to any of claims 1 - 5, **characterized in, that** for in the arrangement the frequency area of vibration controlling and dampening is 10 - 5000 Hz.

7. Arrangement according to any of claims 1 - 6, **characterized in, that** the dynamic forces generated by the actuator (10) are 1 - 50 kN, advantageously 1 - 30 kN and the actuator (10) is not engaged to production of the static force of in production needed effect in the fiber web machine.

8. Arrangement according to any of claims 1 - 7, **characterized in, that** mass of the inertial mass (11) is 10 - 500 kg.

9. Arrangement according to any of claims 2 - 8, **characterized in, that** the inertial actuator comprises a piezo actuator (12) in which as the length of the piezo changes, the primary piston (13) of the linear motion amplifier makes a motion which through an oil volume (14) of the amplifier influences the secondary piston (17) fastened to the inertial mass (11).

10. Arrangement according to any of claims 1 - 9, **characterized in, that** the arrangement is provided inside a roll (31) of a fiber web machine.

11. Arrangement according to claim 10, **characterized in, that** the roll 31 comprises a rotating mantle (33) that is supported by an outer race (34) of a bearing (37), which outer race (34) rotates with the mantle (33) of the roll (31) and the inner race (35) of the bearing (37) is non-rotating and the rotating of the inner race (35) is prevented by gravity that is created the inertial mass (11) located on the inner race (35).

12. Arrangement according to any of claims 1-11, **characterized in, that** the actuator (10) comprises inside a frame (15) installed a piezo actuator (12), which is supported from its upper top end to an perforated plate (16) and from its lower end to a primary piston (13), which primary piston (13)influences with its upper surface to an oil volume (14), which extends in a space between the frame (15) and the piezo actuator (12) to the perforated plate (16) from which the oil is able to flow to the oil volume (14) above the perforated plate (16), and an inertial mass (11) for the actuator (10) is installed above the frame (15) such that at the bottom of a hole in the middle of the mass (11) is arranged a pin (17), which operates as a secondary piston (17), which secondary piston (17) is sealed to the oil volume (14) at the top of the frame (15).

13. Arrangement according to claim 12, **characterized in, that** the piezo actuator (12) is pre-tensioned by pre-tensioning springs (18) influencing the primary piston (13) and that pre-tensioning springs (18) also compensate the gravity caused by the mass (11).

14. Linear motion amplifier, **characterized in, that** the linear motion amplifier comprises a primary and a secondary piston (13, 17) with considerably different areas of the pistons for providing high amplification ratio in motion of inertial mass (11) of an actuator (10), which comprises inside a frame (15) installed force actuator (12), which is supported from its upper top end to an perforated plate (16) and from its lower end to a primary piston (13), which primary piston (13) influences with its upper surface to an oil volume (14), which extends in a space between the frame (15) and the force actuator (12) to the perforated plate (16) from which the oil is able to flow to the oil volume (14) above the perforated plate (16), and an inertial mass (11) for the inertial actuator (10) is installed above the frame (15) such that at the bottom of a hole in the middle of the mass (11) is arranged a pin (17), which operates as a secondary piston (17), which secondary piston (17) is sealed to the oil volume (14) at the top of the frame (15).

15. Linear motion amplifier according to claim 14, **characterized in, that** the force actuator is a piezo actuator (12).
